# EUROPÄISCHE PATENTSCHRIFT

(11) **EP 2 829 929 B1**
(45) Veröffentlichungstag und Bekanntmachung des Hinweises auf die Patenterteilung: **23.10.2019**
(21) Anmeldenummer: 13177849.0
(22) Anmeldetag: 24.07.2013
(51) Int. Cl.: G05B 19/409, G05B 19/042, G06F 1/16, G06F 1/3237, G06F 1/3234, G06F 1/3287

(54) **Feldgerät mit einem trennbaren Anzeige- und/oder Bedienmodul**
Field device with a detachable display and/or input panel
Appareil de terrain avec un affichage et/ou une unité d'entrée détachable

(43) Veröffentlichungstag der Anmeldung: 28.01.2015
(73) Patentinhaber: VEGA Grieshaber KG, 77709 Wolfach (DE)
(72) Erfinder: Allgaier, Volker, 77716 Haslach i. K. (DE); Staiger, Holger, 78739 Hardt (DE)
(74) Vertreter: Patentanwälte Bauer Vorberg Kayser

(56) Entgegenhaltungen:
- DE-A1- 3 926 178
- DE-A1-102006 062 603
- US-A1- 2010 052 925
- US-A1- 2012 109 343

## Beschreibung

Die vorliegende Erfindung betrifft ein Feldgerät gemäß dem Oberbegriff des Patentanspruchs 1.

Aus dem Stand der Technik sind derartige Feldgeräte hinlänglich bekannt und weisen einen Mikroprozessor zur Steuerung des Feldgerätes und ein von dem Feldgerät trennbares Anzeige- und/oder Bedienmodul auf, wobei das Anzeige- und/oder Bedienmodul ebenfalls von dem Mikroprozessor gesteuert ist. Solche Feldgeräte sind zum Beispiel aus US 2012/0109343 A1 oder US 2010/0052925 A1 bekannt. Der Mikroprozessor weist dabei einen Energiesparmodus auf, in dem das Anzeige- und/oder Bedienmodul funktionslos geschaltet oder deaktiviert ist, so dass ein hierdurch entstehender Energieverbrauch reduziert werden kann. Ein solcher Energiesparmodus, der auch als Standby-Modus bezeichnet wird, wird insbesondere bei batteriebetriebenen Feldgeräten eingesetzt, um die zur Energieversorgung verwendeten Batterien zu schonen und damit eine maximale Betriebszeit des Feldgerätes zu erreichen.

Es sind ferner Mikroprozessoren oder Mikrocontroller mit verschiedenen Energiesparmodi bekannt, in denen auch - abhängig vom Energiesparmodus - zum Strom sparen auch Schnittstellen und Prozessortakte deaktiviert werden. Durch eine Deaktivierung der Schnittstellen und Takte des Prozessors besitzt dieser nicht mehr den ursprünglichen Funktionsumfang wie im aktiven Modus, so dass bestimmte Funktionalitäten, insbesondere im Bereich der Datenein- und -ausgabe und damit auch beim Betrieb von Anzeige- und/oder Bedienmodulen, beispielsweise Displays, LED's oder anderen Anzeigen sowie Tastaturen deutlich eingeschränkt oder nicht mehr möglich sind.

Um eine Beendigung des Energiesparmodus, beispielsweise durch eine Dateneingabe zu ermöglichen ist es im Stand der Technik üblich, ein sogenanntes Polling, d. h. zyklisches Abfragen von beispielsweise Bedienelementen oder verbindbaren Peripheriegeräten, durchzuführen. Ein solches Polling bedeutet aber einen erhöhten Rechenaufwand und damit Leistungsverbrauch und verhindert außerdem Energiesparmodi des Mikroprozessors, bei denen ein interner Takt und/oder Schnittstellen des Mikroprozessors deaktiviert werden.

Aus DE 10 2006 062 603 A1 und DE 39 26 178 A1 sind auch Aufweckschaltungen zum Aufwecken eines Feldgeräts aus einem Sparmodus bekannt.

Es ist die Aufgabe der vorliegenden Erfindung ein Feldgerät gemäß dem Stand der Technik derart weiterzubilden, dass Anzeige- und/oder Bedienmodule auch bei einem Energiesparmodus eines Mikrocontrollers, bei dem ein interner Takt und/oder Schnittstellen des Mikrocontrollers deaktiviert sind zuverlässig zu erkennen, wobei eine Änderung des Anzeige- und/oder Bedienmoduls vermieden werden soll.

Diese Aufgabe wird durch ein Feldgerät mit den Merkmalen des Patentanspruchs 1 gelöst.

Vorteilhafte Weiterbildungen sind Gegenstand von abhängigen Patentansprüchen.

Ferner soll ein zyklisches Polling vermieden werden.

Ein erfindungsgemäßes Feldgerät weist einen Mikroprozessor und ein von dem Feldgerät trennbares Anzeige- und/oder Bedienmodul auf, und zeichnet sich dadurch, dass der Mikroprozessor einen Energiesparmodus aufweist, in dem das Anzeige- und/oder Bedienmodul funktionslos geschaltet ist, wobei eine Aufweckschaltung vorgesehen ist, die ein Aufwecksignal erzeugt, wenn das Anzeige- und/oder Bedienmodul mit dem Feldgerät verbunden wird. Die Aufweckschaltung weist einen Komparator auf, wobei dem Komparator eine Referenzspannung und eine Messspannung zugeführt sind, wobei die Aufweckschaltung eine Messschaltung aufweist, an der die Messspannung abgreifbar ist, wobei ein Verbinden des Anzeige- und/oder Bedienmoduls zu einer Änderung der Messspannung führt, wodurch das Aufwecksignal durch den Komparator erzeugt wird.

Durch eine derartige Ausgestaltung wird erreicht, dass die Überwachung des vorzugsweise funktionslos geschalteten Anzeige- und/oder Bedienmoduls anhand des Innenwiderstands an einer Schnittstelle zu dem Feldgerät erfolgen kann und eine Veränderung des überwachten Widerstands zur Erzeugung eines Aufwecksignals führt. Eine derartige Überwachung kann besonders einfach realisiert werden, weil die Aufweckschaltung einen Komparator aufweist. Der Komparator kann dabei beispielsweise eine Spannungsüberwachung durchführen, wobei dem Komparator eine Referenzspannung und eine Messspannung zugeführt sind und das Aufwecksignal erzeugt wird, wenn die Messspannung größer als die Referenzspannung ist. Durch eine derartige Spannungsüberwachung kann beispielsweise ein Innenwiderstand des Anzeige- und/oder Bedienmoduls überwacht werden, wobei eine Änderung des überwachten Widerstandes, d. h. ein Verbinden des Anzeige- und/oder Bedienmoduls zu einer Änderung der Messspannung führt, wodurch bei geeigneter Beschaltung das Aufwecksignal durch den Komparator erzeugt wird.

Alternativ zu einer Überwachung des Innenwiderstandes des verbundenen Anzeige- und/oder Bedienmoduls ist die vorliegende Erfindung auch eine kapazitive oder induktive Überwachung beispielsweise einer an der Schnittstelle 50 anliegenden Kapazität oder Induktivität anwendbar.

Die vorliegende Erfindung ist besonders günstig dann einsetzbar, wenn vorhandene Anzeige- und/oder Bedienmodule nicht verändert werden sollen und insbesondere eine Anbringung zusätzlicher Schalter- und/oder Leitungen nicht erwünscht ist.

Bevorzugterweise weist die erste Aufweckschaltung einen ersten Spannungsteiler auf, der beispielsweise aus einer Reihenschaltung eines ersten Widerstandes, der mit einer Versorgungsspannung verbunden ist und eines zweiten Widerstands, der mit einer Grundspannung verbunden ist, gebildet wird, wobei an einem Verbindungspunkt der beiden Widerstände die Referenzspannung abgreifbar ist.

Durch den Einsatz eines Spannungsteilers kann erreicht werden, dass bei einem sehr geringen Stromverbrauch im Mikro- oder Nanoamperebereich die Referenzspannung erzeugbar ist.

Die Aufweckschaltung weist eine Messschaltung auf, an der die Messspannung abgreifbar ist, wobei die Messschaltung vorzugsweise als zweiter Spannungsteiler ausgebildet ist. Der zweite Spannungsteiler ist dabei vorzugsweise als eine Reihenschaltung aus einem dritten Widerstand und einem vierten Widerstand aufgebaut, wobei der dritte Widerstand und der vierte Widerstand derart dimensioniert sind, dass das bei einer Parallelschaltung des vierten Widerstands und des funktionslos geschalteten Anzeige- und/oder Bedienmoduls die Messspanne der Referenzspannung entspricht.

Durch den Einsatz eines Spannungsteilers kann wie bereits oben erwähnt, bei einem sehr geringen Stromverbrauch eine Messspannung erzeugt werden, wobei durch die Parallelschaltung des vierten Widerstands und des Anzeige- und/oder Bedienmoduls eine Verbindung bzw. Trennung des Anzeige- und/oder Bedienmoduls mit dem Feldgerät einen unmittelbaren Einfluss auf die Messspannung hat.

Eine besonders einfache Ausgestaltung wir erreicht, wenn der dritte Widerstand und der erste Widerstand gleich dimensioniert sind, d. h. die gleiche Größe aufweisen. Vorzugsweise werden hierbei Widerstände im Bereich von einigen Megaohm verwendet, so dass der Stromverbrauch der Aufweckschaltung dadurch reduziert wird.

Bei der Auslegung der Spannungsteiler ist es außerdem vorteilhaft, wenn eine Parallelschaltung des vierten Widerstandes und des funktionslos geschalteten Anzeige- und/oder Bedienmoduls in ihrer Größe dem zweiten Widerstand entspricht.

Bevorzugt sind der erste Spannungsteiler und/oder der zweite Spannungsteiler derart dimensioniert, dass durch die Spannungsteiler ein Strom von weniger als 5 Mikroampere fließt.

Das Aufwecksignal, das von der Aufweckschaltung, bevorzugt dem Komparator, ausgegeben wird, ist mit einer Weiterbildung der Erfindung einem Interrupt-Eingang des Mikroprozessors zugeführt, so dass diese auch aus einem tiefen Energiesparmodus, bei dem beispielsweise der Prozessortakt und Prozessorschnittstellen deaktiviert sind, aufgeweckt werden kann.

Das Interruptsignal kann beispielsweise ein einfacher Port-Interrupt sein, der auch ohne Systemtakt und Aktivierung entsprechender Schnittstellen des Mikrocontrollers genutzt werden kann, um diesen aus einem Energiesparmodus aufzuwecken

Eine Aktivierung der Aufweckschaltung kann beispielsweise dadurch erfolgen, dass der dritte Widerstand zu einem ersten Schalter, der eine Energieversorgung des Anzeige- und/oder Bedienmoduls im Energiesparmodus unterbricht parallel geschaltet ist und vorzugsweise zwischen dem vierten Widerstand und der Grundspannung ein zweiter Schalter angeordnet ist, der im Energiesparmodus den vierten Widerstand mit der Grundspannung verbindet. Auf diese Weise ist der zweite Spannungsteiler, der als Messschaltung agiert, im Normalbetrieb außer Funktion gesetzt und wird nur bei einem Übergang in den Energiesparmodus, in dem das Anzeige- und/oder Bedienmodul funktionslos geschaltet ist, aktiviert.

Die vorliegende Erfindung wird nachfolgend und in Bezugnahme auf die beigefügte Figur eingehend erläutert.

Es zeigt:

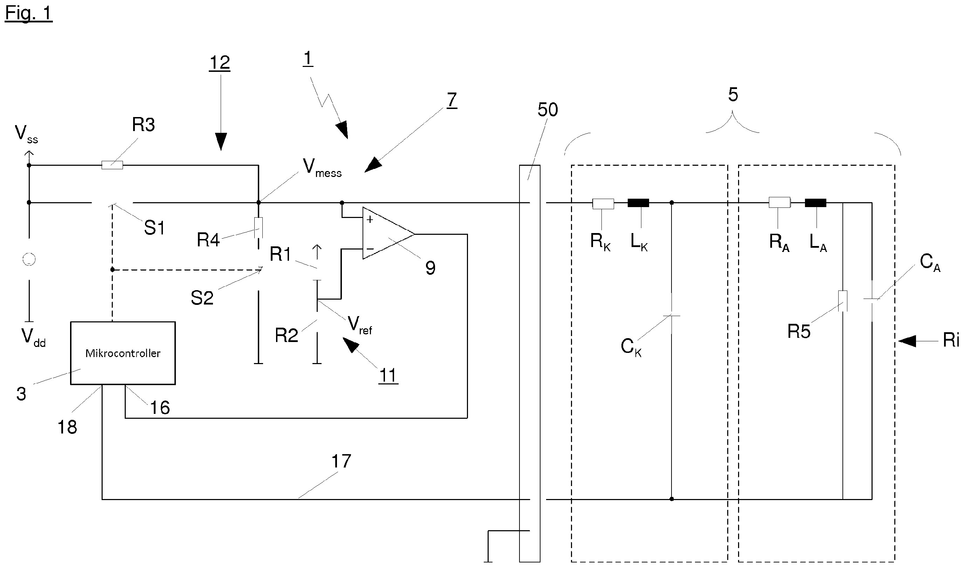

- Figur 1: ein vereinfachtes Schaltbild eines erfindungsgemäße Feldgerätes.

Figur 1 zeigt ein vereinfachtes Schaltbild eines erfindungsgemäßen Feldgerätes 1, wobei in dieser schematischen Darstellung des Feldgerätes 1 lediglich ein das Feldgerät 1 steuernder Mikrocontroller 3, ein mit dem Feldgerät verbindbares Anzeige- und/oder Bedienmodul 5 sowie eine erfindungsgemäße Aufweckschaltung dargestellt sind. Weitere wesentliche Komponenten, wie beispielsweise Sensoren und zugeordnete Signalverarbeitungen, die in dem Feldgerät 1 typischerweise vorgesehen und von dem Mikrocontroller 3 gesteuert sind sind in Figur 1 der Übersichtlichkeit halber nicht dargestellt.

Das Feldgerät 1 ist über eine Schnittstelle 50 mit dem Anzeige- und/oder Bedienmodul 5 verbunden, wobei in dem vorliegenden Ausführungsbeispiel eine serielle Kommunikation zwischen dem Feldgerät 1 und dem Anzeige- und/oder Bedienmodul 5 vorgesehen ist. Eine serielle Kommunikation hat dabei den Vorteil, dass im Vergleich zu einer parallelen Kommunikation eine deutlich reduzierte Anzahl an Leitungen benötigt wird, und damit insbesondere bei großen Leitungslängen ein reduzierter Energieverbrauch erreicht werden kann. Weiterhin können der Verdrahtungsaufwand und die Verdrahtungskosten gering gehalten werden. Der Mikrocontroller 3 ist einerseits über eine Datenleitung 17 mit der Schnittstelle 50 und über die Schnittstelle 50 mit dem Anzeige- und/oder Bedienmodul 5 verbunden, wobei über die Schnittstelle 50 gleichzeitig eine Energieversorgung des Anzeige- und/oder Bedienmoduls 5 erfolgt.

Das Anzeige- und/oder Bedienmodul 5 weist einen Innenwiderstand Ri auf, der sich im Wesentlichen und insbesondere im statischen Bereich durch einen Widerstand R5 darstellen lässt. Zur Verfeinerung eines Ersatzschalters des Anzeige- und/oder Bedienmoduls 5 können außerdem ein Ersatzschaltbild für das verwendete Kabel, das sich aus der Verschaltung eines Kabelwiderstand R_{K} eine Kabelinduktivität L_{K} und eine Kabelkapazität C_{K} ergibt, verwendet werden. Zusätzlich können weitere Induktivitäten, Kapazitäten und Widerstände der tatsächlichen Anzeigeeinheit R_{A}, L_{A}, C_{A} verwendet werden, wobei im einfachsten Fall eine Messung des Innenwiderstands Ri und ein anschließender Abgleich der Referenzspannung V_{ref} erfolgt.

Die Aufweckschaltung 7 im vorliegenden Ausführungsbeispiel weist als zentrales Bauelement einen Komparator 9 auf, der mit einem ersten Spannungsteiler 11, der aus einem ersten Widerstand R1 und einem zweiten Widerstand R2 aufgebaut ist, wobei die Serienschaltung der Widerstände R1, R2 zu einer Versorgungsspannung Vss und einer Grundspannung V_{dd} geschaltet ist. Zwischen den Widerständen R1, R2 ist die Referenzspannung V_{ref} abgreifbar, die dem Komparator 9 an seinem invertierenden Eingang zugeführt ist. An seinem nicht invertierenden Eingang ist dem Komparator 9 eine Messspannung Vₘₑₛₛ zugeführt, die von einem zweiten Spannungsteiler 12 erzeugt wird, der aus einer Reihenschaltung eines dritten Widerstandes R3 und eines vierten Widerstandes R4, der zu dem Anzeige- und/oder Bedienmodul 5 parallel geschaltet ist, erzeugt wird.

Der Mikrocontroller 3 steuert außerdem einen ersten Schalter S1 und einen zweiten Schalter S2, wobei der erste Schalter S1 eine Energieversorgung des Anzeige- und/oder Bedienmoduls 5 bei einem Übergang in einen Energiesparmodus unterbricht, so dass das Anzeige- und/oder Bedienmodul 5 funktionslos geschaltet ist. Der erste Schalter S1 ist zu dem dritten Widerstand R3 parallel geschaltet, so dass dieser im normalen Betrieb des Feldgerätes 1 durch den geschlossenen Schalter S1 überbrückt ist und damit im Normalbetrieb keine Funktion aufweist. Um im Normalbetrieb weiter Energie zu sparen ist außerdem zwischen dem vierten Widerstand R4 und der Grundspannung V_{dd} der zweite Schalter S2 vorgesehen, der im Normalbetrieb geöffnet und im Energiesparmodus geschlossen ist, so dass im Normalbetrieb über den vierten Widerstand R4 kein Strom fließt und damit keine Energie verbraucht wird.

Im vorliegenden Ausführungsbeispiel sind der erste Widerstand R1 und der dritte Widerstand R3 gleich groß gewählt, so dass eine Dimensionierung der Spannungsteile 11, 12 derart erfolgt, dass die Parallelschaltung aus dem vierten Widerstand R4 und dem Innenwiderstand Ri des Anzeige- und/oder Bedienmoduls 5 die gleiche Größe aufweist, wie der zweite Widerstand R2 des ersten Spannungsteilers 11.

Wird nun das Feldgerät 1 in den Energiesparmodus überführt, so sind aufgrund der gleichen Ausführung der Spannungsteiler 11, 12 die Messspannung Vₘₑₛₛ und die Referenzspannung V_{ref} gleich groß, so dass der Komparator 9 kein Aufwecksignal ausgibt. Wird das Anzeige- und/oder Bedienmodul 5 von dem Feldgerät 1 entfernt, dadurch, dass an der Schnittstelle 50 eine Steckverbindung gelöst wird, so verändert sich der Strom über den zweiten Spannungsteiler 12 sowie die an dem vierten Widerstand R4 abfallende Spannung, so dass die Messspannung Vₘₑₛₛ im Vergleich zur Referenzspannung V_{ref} ansteigt und damit ein Auswegsignal an einen Interruptport 16 des Mikrocontrollers 3 abgegeben wird. Durch ein derartiges Interrupt-Signal wird der Mikrocontroller 3 aus dem Energiesparmodus aufgeweckt und aktiviert damit den internen Takt und die entsprechenden Schnittstellen, beispielsweise die Datenschnittstelle 18.

Eine entsprechende Aufweckschaltung 7 kann nicht nur in batteriebetriebenen Feldgeräten sondern auch in netzbetriebenen Geräten eingesetzt werden, um Energie einzusparen, Polling-Vorgänge zu vermeiden und damit frei gewordene Rechenzeit des Mikrocontrollers für andere Aufgaben zu verwenden oder entsprechende Rechenzeiten und damit Energie einzusparen.

### Bezugszeichenliste

- 1: Feldgerät
- 3: Mikroprozessor
- 5: Anzeige/Bedienmodul
- 7: Aufweckschaltung

- 10: Schnittstelle
- 11: erster Spannungsteiler
- 12: zweiter Spannungsteiler
- 14: Messschaltung
- 16: Interrupteingang
- 17: Datenleitung
- 18: Dateneingang

- R_{A}: Widerstand
- L_{A}: Induktivität
- C_{A}: Kapazität

- R_{K}: Leitungswiderstand
- L_{K}: Leitungsinduktivität
- C_{K}: Leitungskapazität

- V_{ref}: Referenzspannung
- Vₘₑₛₛ: Messspannung

- R1: erster Widerstand
- R2: zweiter Widerstand
- R3: dritter Widerstand
- R4: vierter Widerstand
- R5: fünfter Widerstand
- Ri: Innenwiderstand
- S1: erster Schalter
- S2: zweiter Schalter

- Vₛₛ: Versorgungsspannung
- V_{dd}: Grundspannung

## Patentansprüche

1. Feldgerät (1) mit einem Mikroprozessor (3) und einer Aufweckschaltung (7), wobei das Feldgerät (1) mit einem Anzeige- und oder Bedienmodul (5) verbindbar ist,
**dadurch gekennzeichnet, dass** der Mikroprozessor (3) einen Energiesparmodus aufweist, in dem das Anzeige- und/oder Bedienmodul (5) funktionslos geschaltet ist,
dass die Aufweckschaltung (7) einen Komparator (9) aufweist,
dass dem Komparator (9) eine Referenzspannung (V_{ref}) und eine Messspannung (Vₘₑₛₛ) zugeführt sind,
dass die Aufweckschaltung (7) eine Messschaltung (12) aufweist, an der die Messspannung (Vₘₑₛₛ) abgreifbar ist,
wobei ein Entfernen oder Verbinden des Anzeige- und/oder Bedienmoduls zu einer Änderung der Messspannung (Vₘₑₛₛ) führt, und dass der Komparator (9) dazu eingerichtet ist das Aufwecksignal zu erzeugen, wenn die Messspannung (V) größer als die mess Referenzspannung (V_{ref}) ist.

2. Feldgerät (1) nach Anspruch 1,
**dadurch gekennzeichnet, dass** das Aufwecksignal erzeugt wird, wenn die Messspannung (Vₘₑₛₛ) größer als die Referenzspannung (V_{ref}) ist.

3. Feldgerät (1) nach einem der Ansprüche 1 oder 2,
**dadurch gekennzeichnet, dass** die Aufweckschaltung (7) einen ersten Spannungsteiler (11) mit einer Reihenschaltung aus einem ersten Widerstand (R1), der mit einer Versorgungsspannung (Vss) verbunden ist und mit einem zweiten Widerstand (R2), der mit einer Grundspannung (V_{dd}) verbunden ist, aufweist, an dem die Referenzspannung (V_{ref}) abgreifbar ist.

4. Feldgerät (1) nach Anspruch 3,
**dadurch gekennzeichnet, dass** die Messschaltung als zweiter Spannungsteiler (12) ausgebildet ist.

5. Feldgerät (1) nach Anspruch 4,
**dadurch gekennzeichnet, dass** der zweite Spannungsteiler (12) eine Reihenschaltung aus einem dritten Widerstand (R3) und einen vierten Widerstand (R4) aufweist, wobei der dritte Widerstand (R3) und der vierte Widerstand (R4) derart dimensioniert sind, dass bei einer Parallelschaltung des vierten Widerstandes (R4) und des funktionslos geschalteten Anzeige- und Bedienmoduls (5) die Messspannung (Vₘₑₛₛ) der Referenzspannung (V_{ref}) entspricht.

6. Feldgerät (1) nach Anspruch 5,
**dadurch gekennzeichnet, dass** der dritte Widerstand (R3) und der erste Widerstand (R1) gleich dimensioniert sind.

7. Feldgerät (1) nach Anspruch 5 oder 6,
**dadurch gekennzeichnet, dass** eine Parallelschaltung des vierten Widerstandes (R4) und des Anzeige- und/oder Bedienmoduls in ihrer Größe dem zweiten Widerstand (R2) entspricht.

8. Feldgerät (1) nach einem der Ansprüche 3 bis 7,
**dadurch gekennzeichnet, dass** der erste Spannungsteiler (11) und/oder der zweite Spannungsteiler (12) derart dimensioniert sind, dass durch die Spannungsteiler (11, 12) ein Strom von weniger als 5 µA fließt.

9. Feldgerät (1) nach einem der vorhergehenden Ansprüche,
**dadurch gekennzeichnet, dass** das Aufwecksignal einem Interrupteingang (16) des Mikroprozessors (3) zugeführt ist.

10. Feldgerät (1) nach einem der vorhergehenden Ansprüche,
**dadurch gekennzeichnet, dass** der dritte Widerstand (R3) zu einem ersten Schalter (S1), der eine Energieversorgung des Anzeige- und/oder Bedienmoduls (5) im Energiesparmodus unterbricht, parallel geschaltet ist.

11. Feldgerät (1) nach einem der Ansprüche 5 bis 10,
**dadurch gekennzeichnet, dass** zwischen dem vierten Widerstand (R4) und der Grundspannung (V_{dd}) ein zweiter Schalter (S2) angeordnet ist, der im Energiesparmodus den vierten Widerstand (R4) mit der Grundspannung (V_{dd}) verbindet.

## Claims

1. A field device (1) with a microprocessor (3) and a wake-up circuit (7), wherein the field device (1) can be connected to a display and/or operating module (5),
**characterized in that**
the microprocessor (3) has an energy-saving mode in which the display and/or operating module (5) is disabled,
that the wake-up circuit (7) has a comparator (9),
that the comparator (9) is supplied with a reference voltage (V_{ref}) and a measuring voltage (Vmess),
that the wake-up circuit (7) has a measuring circuit (12) at which the measuring voltage (Vₘₑₛₛ) can be tapped, wherein removing or connecting the display and/or operating module results in a change in the measuring voltage (Vmess), and
that the comparator (9) is configured for generating the wake-up signal when the measuring voltage (Vₘₑₛₛ) is greater than the reference voltage (V_{ref}).

2. The field device (1) according to claim 1,
**characterized in that**
the wake-up signal is generated when the measuring voltage (Vₘₑₛₛ) is greater than the reference voltage (V_{ref}).

3. The field device (1) according to any one of the claims 1 or 2,
**characterized in that**
the wake-up circuit (7) has a first voltage divider (11) with a series connection comprised of a first resistor (R1), which is connected to a supply voltage (Vₛₛ), and a second resistor (R2), which is connected to a base voltage (V_{dd}), at which the reference voltage (V_{ref}) can be tapped.

4. The field device (1) according to claim 3,
**characterized in that**
the measuring circuit is configured as a second voltage divider (12).

5. The field device (1) according to claim 4,
**characterized in that**
the second voltage divider (12) has a series connection comprised of a third resistor (R3) and a fourth resistor (R4), wherein the third resistor (R3) and the fourth resistor (R4) are dimensioned such that, when the fourth resistor (R4) and the disabled display and operating module (5) are connected in parallel, the measuring voltage (Vₘₑₛₛ) matches the reference voltage (V_{ref}).

6. The field device (1) according to claim 5,
**characterized in that**
the third resistor (R3) and the first resistor (R1) are equally dimensioned.

7. The field device (1) according to claim 5 or 6,
**characterized in that** a parallel connection of the fourth resistor (R4) and the display and/or operating module matches the second resistor (R2) in magnitude.

8. The field device (1) according to any one of the claims 3 to 7,
**characterized in that**
the first voltage divider (11) and/or the second voltage divider (12) are dimensioned such that a current of less than 5 µA flows through the voltage dividers (11, 12).

9. The field device (1) according to any one of the preceding claims,
**characterized in that**
the wake-up signal is supplied to an interrupt input (16) of the microprocessor (3).

10. The field device (1) according to any one of the preceding claims,
**characterized in that** the third resistor (R3) is connected in parallel with a first switch (S1) that interrupts an energy supply of the display and/or operating module (5) in the energy saving mode.

11. The field device (1) according to any one of the claims 5 to 10,
**characterized in that** a second switch (S2), which connects the fourth resistor (R4) to the base voltage (V_{dd}) in the energy-saving mode, is disposed between the fourth resistor (R4) and the base voltage (V_{dd}).

## Revendications

1. Appareil de terrain (1) avec un microprocesseur (3) et un circuit de réveil (7), dans lequel l'appareil de terrain (1) peut être connecté à un module d'affichage et/ou de commande (5),
**caractérisé en ce que** le microprocesseur (3) présente un mode d'économie d'énergie dans lequel le module d'affichage et/ou de commande (5) est commuté au repos,
que le circuit de réveil (7) présente un comparateur (9),
qu'une tension de référence (V_{ref}) et une tension de mesure (Vₘₑₛₛ) sont amenées au comparateur (9),
que le circuit de réveil (7) présente un circuit de mesure (12) au niveau duquel la tension de mesure (Vₘₑₛₛ) peut être prise,
dans lequel une séparation ou connexion du module d'affichage et/ou de commande produit une modification de la tension de mesure (Vₘₑₛₛ), et que le comparateur (9) est étudié pour générer le signal de mesure lorsque la tension de mesure (Vₘₑₛₛ) est supérieure à la tension de référence (V_{ref}).

2. Appareil de terrain (1) selon la revendication 1,
**caractérisé en ce que** le signal de réveil est généré lorsque la tension de mesure (Vₘₑₛₛ) est supérieure à la tension de référence (V_{ref}).

3. Appareil de terrain (1) selon l'une des revendications 1 ou 2,
**caractérisé en ce que** le circuit de réveil (7) présente un premier diviseur de tension (11) avec une connexion série d'une première résistance (R1), laquelle est connectée à une tension d'alimentation (Vₛₛ) et avec une deuxième résistance (R2), laquelle est connectée à une tension de base (V_{dd}), au niveau duquel la tension de référence (V_{ref}) peut être prise.

4. Appareil de terrain (1) selon la revendication 3,
**caractérisé en ce que** le circuit de mesure est réalisé en tant que deuxième diviseur de tension (12).

5. Appareil de terrain (1) selon la revendication 4,
**caractérisé en ce que** le deuxième diviseur de tension (12) présente une connexion série d'une troisième résistance (R3) et d'une quatrième résistance (R4), dans lequel la troisième résistance (R3) et la quatrième résistance (R4) sont dimensionnées de telle sorte qu'en cas de connexion parallèle de la quatrième résistance (R4) et du module d'affichage et de commande (5) commuté au repos, la tension de mesure (Vₘₑₛₛ) correspond à la tension de référence (V_{ref}).

6. Appareil de terrain (1) selon la revendication 5,
**caractérisé en ce que** la troisième résistance (R3) et la première résistance (R1) sont dimensionnées de manière égale.

7. Appareil de terrain (1) selon la revendication 5 ou 6,
**caractérisé en ce qu'**une connexion parallèle de la quatrième résistance (R4) et du module d'affichage et/ou de commande correspond de par sa taille à la deuxième résistance (R2).

8. Appareil de terrain (1) selon l'une des revendications 3 à 7,
**caractérisé en ce que** le premier diviseur de tension (11) et/ou le deuxième diviseur de tension (12) sont dimensionnés de telle sorte qu'un courant de moins de 5 µA circule à travers les diviseurs de tension (11, 12) .

9. Appareil de terrain (1) selon l'une des revendications précédentes,
**caractérisé en ce que** le signal de réveil est amené à une entrée d'interruption (16) du microprocesseur (3).

10. Appareil de terrain (1) selon l'une des revendications précédentes,
**caractérisé en ce que** la troisième résistance (R3) est connectée en parallèle à un premier commutateur (S1) qui interrompt une alimentation en énergie du module d'affichage et/ou de commande (5) dans le mode d'économie d'énergie.

11. Appareil de terrain (1) selon l'une des revendications 5 à 10,
**caractérisé en ce qu'**entre la quatrième résistance (R4) et la tension de base (V_{dd}) , un deuxième commutateur (S2) est disposé lequel, dans le mode d'économie d'énergie, connecte la quatrième résistance (R4) à la tension de base (V_{dd}) .
